# EUROPEAN PATENT APPLICATION

(11) **EP 1 643 773 A2**
(43) Date of publication of application: **05.04.2006**
(21) Application number: 05021321.4
(22) Date of filing: 29.09.2005
(51) Int. Cl.: H04N 7/26

(54) **Encoding and decoding with motion compensated temporal filtering**

(30) Priority: 01.10.2004 JP 2004290549
(71) Applicant: NTT DoCoMo INC., Chiyoda-ku Tokyo 100-6150 (JP)
(72) Inventor: Boon, Choong Seng, c/o Int. Prop. Dpt., Chiyoda-ku, Tokyo 100-6150 (JP); Tan, Thiow Keng, c/o Int. Prop. Dpt., Chiyoda-ku, Tokyo 100-6150 (JP)
(74) Representative: Grosse, Wolfgang

(57) **Abstract**

A moving picture coding apparatus according to an embodiment is arranged to define a plurality of images in a moving picture two by two as targets to be coded. The images to be coded are decomposed into subbands, a high-subband signal and a low-subband signal, by a subband decomposing process. The high-subband signal is coded into a compressed high-subband signal by a first coding process and the low-subband signal is coded into a compressed low-subband signal by a second coding process. The compressed low-subband signal is decoded into a reproduced low-subband signal by a second decoding process. In the second coding process, a predicted signal for the low-subband signal to be coded is generated from a reproduced low-subband signal based on another low-subband signal, and a residual signal based on a difference between the low-subband signal to be coded and the reproduced low-subband signal is coded.

## Description

### BACKGROUND OF THE INVENTION

### Field of the Invention

The present invention relates to a moving picture coding apparatus, moving picture decoding apparatus, moving picture coding method, moving picture decoding method, moving picture coding program, and moving picture decoding program using a motion-compensated temporal subband decomposition process.

### Related Background of the Invention

A variety of compression coding technologies are known as technologies for implementing efficient transmission and storage of moving picture data. For example, the known technologies include the moving picture coding technologies adopted in MPEG1-4 and H.261-H.264, the moving picture coding technologies using the subband decomposition and wavelet decomposition, and so on.

In the moving picture coding systems using the subband decomposition and wavelet decomposition, a plurality of images constituting a moving picture are defined one by one as a target to be coded. An image as a target to be coded is decomposed into a plurality of frequency bands by a predetermined filter. Each band signal is quantized and further coded. This coding is referred to as "intraframe subband coding system."

On the other hand, there is a coding system based on a process called temporal subband decomposition. In this system, a plurality of images constituting a moving picture are defmed two by two as targets to be coded. Two images as targets to be coded are temporally decomposed into subbands, a high-frequency subband signal (hereinafter referred to as a high-subband signal) and a low-frequency subband signal (hereinafter referred to as a low-subband signal), by a predetermined filter. The high-subband signal is coded by discrete cosine transform. The low-subband signal is paired with a low-subband signal similarly generated from two images different from the two images to be coded, and they are further temporally decomposed into subbands. In this system, the temporal subband decomposition of low-subband signals is repeated, thereby achieving good coding performance.

Seung-Jong Choi and John W. Woods, "Motion-Compensated 3-D Subband Coding of Video," IEEE TRANSACTIONS ON IMAGE PROCESSING, VOL. 8, NO. 2, FEBRUARY 1999 describes a moving picture coding system using a process called "motion-compensated temporal subband decomposition" resulting from addition of the conventional motion detection and motion compensation to the aforementioned temporal subband decomposition.

The motion-compensated temporal subband decomposition reduces the noise signal inherent to the input image, for the low-subband signal and decreases prediction error for the high-subband signal, so as to increase compression coding efficiency.

### SUMMARY OF THE INVENTION

It is, however, necessary to increase the number of subband decomposing processes of low-subband signals, in order to increase the compression coding efficiency of the moving picture coding using the aforementioned motion-compensated temporal subband decomposition.

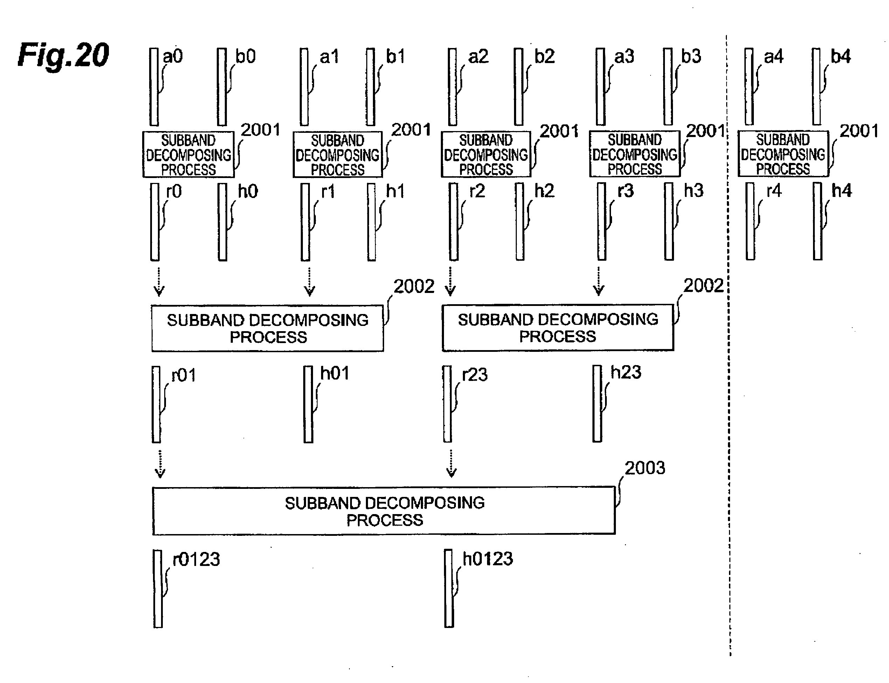

Fig. 20 is an illustration schematically showing the flow of the conventional motion-compensated temporal subband decomposing process. In Fig. 20, a0, b0, a1, b1, a2, b2, a3, b3, a4, and b4 indicate respective images constituting a moving picture. Two images ai and bi (i=0, 1, 2, 3,...) out of them are decomposed into a high-subband signal hi (i=0, 1, 2, 3,...) and a low-subband signal ri (i=0, 1, 2, 3,...) by subband decomposing process 2001. Two adjacent low-subband signals ri are further decomposed into a high-subband signal and a low-subband signal by subband decomposing process 2002. For example, r0 and r1 are decomposed into high-subband signal h01 and low-subband signal r01 by subband decomposing process 2002. Similarly, r2 and r3 are decomposed into high-subband signal h23 and low-subband signal r23 by subband decomposing process 2002. In order to increase the compression rate, r01 and r23 are decomposed into high-subband signal h0123 and low-subband signal r0123 by subband decomposing process 2003. The image signals r0123, h0123, h01, h23, h0, h1, h2, and h3 resulting from the above decompositions are coded by a predetermined method. The Haar transform is commonly used as the subband decomposing processes 2001, 2002, and 2003.

As seen from Fig. 20, the images of eight frames a0, b0, a1, b1, a2, b2, a3, and b3 are necessary for generation of the final low-subband signal r0123. In order to further increase the compression rate, images of sixteen frames are needed.

As described above, the coding using the conventional motion-compensated temporal subband decomposition requires increase in the number of decompositions of low-subband signals in order to increase the compression rate. Therefore, the delay time of video transmission is large. In addition, it requires a large-capacity frame memory in order to store the input images and intermediate processed images before an end of the last decomposition of low-subband signals.

This problem also arises similarly on the occasion of decoding data on the basis of the motion-compensated temporal subband decomposition.

An object of the present invention is therefore to provide a moving picture coding apparatus, moving picture coding method, and moving picture coding program capable of reducing the processing delay of the motion-compensated temporal subband decomposition and coding a moving picture with a high coding efficiency. Another object of the present invention is to provide a moving picture decoding apparatus, moving picture decoding method, and moving picture decoding program capable of decoding a moving picture with a small processing delay, from data generated by the moving picture coding apparatus.

A motion-picture coding apparatus according to an aspect of the present invention comprises (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; and (c) second coding means for applying a second coding process to the low-subband signal, thereby generating a compressed low-subband signal; (d) wherein the second coding means defines the low-subband signal based on the first image and the second image, as a low-subband signal to be coded, references a low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

A motion-picture coding method according to another aspect of the present invention comprises (a) a subband decomposing step wherein subband decomposing means defines two images temporally arranged in order in a moving picture, as a first image and a second image, and temporally decomposes the first image and the second image into subbands, thereby generating a high-subband signal and a low-subband signal; (b) a first coding step wherein first coding means applies a first coding process to the high-subband signal, thereby generating a compressed high-subband signal; and (c) a second coding step wherein second coding means applies a second coding process to the low-subband signal, thereby generating a compressed low-subband signal; (d) wherein in the second coding step the second coding means defines the low-subband signal based on the first image and the second image, as a low-subband signal to be coded, references a low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

A motion-picture coding program according to still another aspect of the present invention is a program for letting a computer function as (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; and (c) second coding means for applying a second coding process to the low-subband signal, thereby generating a compressed low-subband signal. In this configuration, (d) the second coding means defines the low-subband signal based on the first image and the second image, as a low-subband signal to be coded, references a low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

According to the present invention, a plurality of images constituting a moving picture are defined two by two as target images to be coded, and the subband decomposition of the images to be coded is executed only once. Therefore, the delay due to the subband decomposition is reduced. The second coding process is to code the residual signal based on the difference between the low-subband signal based on the images to be coded and the predicted signal based on the low-subband signal previously generated from the two images of the moving picture different from the images to be coded. Therefore, the low-subband signal is efficiently coded even though the number of subband decomposition of the low-subband signal is one.

A motion-picture coding apparatus according to an aspect of the present invention comprises (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; (c) second coding means for applying a second coding process to the low-subband signal, thereby generating a compressed low-subband signal; and (d) decoding means (i.e. sencod decoding means) for applying a decoding process (i.e. second decoding process) for reproduction of the low-subband signal, to the compressed low-subband signal, thereby generating a reproduced low-subband signal; (e) wherein the second coding means defines the low-subband signal based on the first image and the second image, as a low-subband signal to be coded, references a reproduced low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

A motion-picture coding method according to another aspect of the present invention comprises (a) a subband decomposing step wherein subband decomposing means defines two images temporally arranged in order in a moving picture, as a first image and a second image, and temporally decomposes the first image and the second image into subbands, thereby generating a high-subband signal and a low-subband signal; (b) a first coding step wherein first coding means applies a first coding process to the high-subband signal, thereby generating a compressed high-subband signal; (c) a second coding step wherein second coding means applies a second coding process to the low-subband signal, thereby generating a compressed low-subband signal; and (d) a decoding step (i.e. a second decoding step) wherein decoding means (i.e. second decoding means) applies a decoding process (i.e. a second decoding process) for reproduction of the low-subband signal, to the compressed low-subband signal, thereby generating a reproduced low-subband signal; (e) wherein in the second coding step the second coding means defines the low-subband signal based on the first image and the second image, as a low-subband signal to be coded, references a reproduced low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

A motion-picture coding program according to still another aspect of the present invention is a program for letting a computer function as (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; (c) second coding means for applying a second coding process to the low-subband signal, thereby generating a compressed low-subband signal; and (d) decoding means (i.e. second decoding means) for applying a decoding process (i.e. a second decoding process) for reproduction of the low-subband signal, to the compressed low-subband signal, thereby generating a reproduced low-subband signal. In this configuration, (e) the second coding means defines the low-subband signal based on the first image and the second image, as a low-subband signal to be coded, references a reproduced low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

According to the present invention, a plurality of images constituting a moving picture are defined two by two as images to be coded, and the subband decomposition of the images to be coded is executed only once. Therefore, the delay due to the subband decomposition is small. The second coding process is to code the residual signal based on the difference between the low-subband signal based on the images to be coded and the predicted signal based on the reproduced low-subband signal previously generated from the two images of the moving picture different from the images to be coded. Therefore, the low-subband signal is efficiently coded even though the number of subband decomposition of the low-subband signal is one.

A motion-picture coding apparatus according to an aspect of the present invention comprises (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; (c) first decoding means for applying a first decoding process for reproduction of the compressed high-subband signal, to the compressed high-subband signal, thereby generating a reproduced high-subband signal; (d) second coding means for applying a second coding process to the low-subband signal, thereby generating a compressed low-subband signal; (e) second decoding means for applying a second decoding process for reproduction of the low-subband signal, to the compressed low-subband signal, thereby generating a reproduced low-subband signal; and (f) subband combining means for combining the reproduced high-subband signal generated by the first decoding means, with the reproduced low-subband signal generated by the second decoding means, thereby generating reproduced images of the first image and the second image; (g) wherein the second coding means defines the low-subband signal based on the first image and the second image, as a low-subband signal to be coded, references at least one of a reproduced low-subband signal previously generated from two images of the moving picture different from the first image and the second image and two reproduced images generated from said two images, thereby to generate a predicted signal for the low-subband signal to be coded, and codes a residual signal based on a difference between the low-subband signal to be coded and the predicted signal to generate the compressed low-subband signal.

A motion-picture coding method according to another aspect of the present invention comprises (a) a subband decomposing step wherein subband decomposing means defines two images temporally arranged in order in a moving picture, as a first image and a second image, and temporally decomposes the first image and the second image into subbands, thereby generating a high-subband signal and a low-subband signal; (b) a first coding step wherein first coding means applies a first coding process to the high-subband signal, thereby generating a compressed high-subband signal; (c) a first decoding step wherein first decoding means applies a first decoding process for reproduction of the compressed high-subband signal, to the compressed high-subband signal, thereby generating a reproduced high-subband signal; (d) a second coding step wherein second coding means applies a second coding process to the low-subband signal, thereby generating a compressed low-subband signal; (e) a second decoding step wherein second decoding means applies a second decoding process for reproduction of the low-subband signal, to the compressed low-subband signal, thereby generating a reproduced low-subband signal; and (f) a subband combing step wherein subband combining means combines the reproduced high-subband signal generated by the first decoding means and the reproduced low-subband signal generated by the second decoding means, thereby generating reproduced images of the first image and the second image; (g) wherein in the second coding step the second coding means defines the low-subband signal based on the first image and the second image, as a low-subband signal to be coded, references at least one of a reproduced low-subband signal previously generated from two images of the moving picture different from the first image and the second image, and two reproduced images previously generated from the two images, thereby to generate a predicted signal for the low-subband signal to be coded, and codes a residual signal based on a difference between the low-subband signal to be coded and the predicted signal to generate the compressed low-subband signal.

A motion-picture coding program according to still another aspect of the present invention is a program for letting a computer function as: (a) subband decomposing means for defining two images temporally arranged in order in a moving picture, as a first image and a second image, and temporally decomposing the first image and the second image into subbands, thereby generating a high-subband signal and a low-subband signal; (b) first coding means for applying a first coding process to the high-subband signal, thereby generating a compressed high-subband signal; (c) first decoding means for applying a first decoding process for reproduction of the compressed high-subband signal, to the compressed high-subband signal, thereby generating a reproduced high-subband signal; (d) second coding means for applying a second coding process to the low-subband signal, thereby generating a compressed low-subband signal; (e) second decoding means for applying a second decoding process for reproduction of the low-subband signal, to the compressed low-subband signal, thereby generating a reproduced low-subband signal; and (f) subband combining means for combining the reproduced high-subband signal generated by the first decoding means, with the reproduced low-subband signal generated by the second decoding means, thereby generating reproduced images of the first image and the second image. In this configuration, (g) the second coding means defines the low-subband signal based on the first image and the second image, as a low-subband signal to be coded, references at least one of a reproduced low-subband signal previously generated from two images of the moving picture different from the first image and the second image and two reproduced images generated from said two images, thereby to generate a predicted signal for the low-subband signal to be coded, and codes a residual signal based on a difference between the low-subband signal to be coded and the predicted signal to generate the compressed low-subband signal.

According to the present invention, a plurality of images constituting a moving picture are defined two by two as images to be coded, and the subband decomposition of the images to be coded is executed only once. Therefore, the delay due to the subband decomposition is small. The second coding process is to code the residual signal based on the difference between the low-subband signal based on the images to be coded and the predicted signal based on at least one of the reproduced low-subband signal and the reproduced images previously generated from the two images of the moving picture different from the images to be coded. Therefore, the low-subband signal is efficiently coded even though the number of subband decomposition of the low-subband signal is one.

A motion-picture decoding apparatus according to an aspect of the present invention comprises (a) first decoding means for applying a first decoding process to a compressed high-subband signal resulting from coding of a high-subband signal obtained by subband decomposition of two images temporally arranged in order in a moving picture, thereby generating a reproduced high-subband signal; and (b) second decoding means for applying a second decoding process to a compressed low-subband signal resulting from coding of a low-subband signal obtained by subband decomposition of said two images, thereby generating a reproduced low-subband signal; (c) wherein the second decoding means references a reproduced low-subband signal previously generated from a compressed low-subband signal different from the compressed low-subband signal to be decoded, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

A motion-picture decoding method according to another aspect of the present invention comprises (a) a first decoding step wherein first decoding means applies a first decoding process to a compressed high-subband signal resulting from coding of a high-subband signal obtained by subband decomposition of two images temporally arranged in order in a moving picture, thereby generating a reproduced high-subband signal; and (b) a second decoding step wherein second decoding means applies a second decoding process to a compressed low-subband signal resulting from coding of a low-subband signal obtained by subband decomposition of the two images, thereby generating a reproduced low-subband signal; (c) wherein in the second decoding step the second decoding means references a reproduced low-subband signal previously generated from a compressed low-subband signal different from the compressed low-subband signal to be decoded, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded. The motion-picture decoding method according to the present invention may further comprise a subband combining step wherein subband combining means combines the reproduced high-subband signal and the reproduced low-subband signal to generate two reproduced images as reproduction of each of the two images.

A motion-picture decoding program according to still another aspect of the present invention is a program for letting a computer function as (a) first decoding means for applying a first decoding process to a compressed high-subband signal resulting from coding of a high-subband signal obtained by subband decomposition of two images temporally arranged in order in a moving picture, thereby generating a reproduced high-subband signal; and (b) second decoding means for applying a second decoding process to a compressed low-subband signal resulting from coding of a low-subband signal obtained by subband decomposition of the two images, thereby generating a reproduced low-subband signal. In this configuration, (c) the second decoding means references a reproduced low-subband signal previously generated from a compressed low-subband signal different from the compressed low-subband signal to be decoded, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded. The motion-picture decoding program according to an embodiment of the present invention may be a program for letting the computer further function as subband combining means for combining the reproduced high-subband signal and the reproduced low-subband signal to generate two reproduced images as reproduction of each of the two images.

In the present invention, the reproduced low-subband signal is generated by adding the predicted signal generated by referencing the reproduced low-subband signal previously generated from the compressed low-subband signal different from the compressed low-subband signal to be decoded, to the signal (reproduced residual signal) resulting from decoding of the compressed low-subband signal to be decoded. Since the reproduced low-subband signal is generated by only one decoding process as described above, the present invention reduces the delay in reconstruction of the reproduced low-subband signal. In the present invention, where the subband combining means is further provided, the reproduced low-subband signal is combined with the corresponding reproduced high-subband signal to generate two reproduced images. Since the two reproduced images are generated by only one subband combining process as described above, the delay is reduced in reconstruction of the moving picture.

A motion-picture decoding apparatus according to an aspect of the present invention comprises (a) first decoding means for applying a first decoding process to a compressed high-subband signal resulting from coding of a high-subband signal obtained by subband decomposition of two images temporally arranged in order in a moving picture, thereby generating a reproduced high-subband signal; (b) second decoding means for applying a second decoding process to a compressed low-subband signal resulting from coding of a low-subband signal obtained by subband decomposition of said two images, thereby generating a reproduced low-subband signal; and (c) subband combining means for combining the reproduced high-subband signal and the reproduced low-subband signal, thereby generating two reproduced images as reproduction of each of the two images; (d) wherein the second decoding means references at least one of a reproduced low-subband signal previously generated from a compressed low-subband signal different from the compressed low-subband signal to be decoded, and two reproduced images previously generated from the reproduced low-subband signal and a reproduced high-subband signal corresponding to the reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

A motion-picture decoding method according to another aspect of the present invention comprises (a) a first decoding step wherein first decoding means applies a first decoding process to a compressed high-subband signal resulting from coding of a high-subband signal obtained by subband decomposition of two images temporally arranged in order in a moving picture, thereby generating a reproduced high-subband signal; (b) a second decoding step wherein second decoding means applies a second decoding process to a compressed low-subband signal resulting from coding of a low-subband signal obtained by subband decomposition of the two images, thereby generating a reproduced low-subband signal; and (c) a subband combining step wherein subband combining means combines the reproduced high-subband signal and the reproduced low-subband signal, thereby generating two reproduced images as reproduction of each of the two images; (d) wherein in the second decoding step the second decoding means references at least one of a reproduced low-subband signal previously generated from a compressed low-subband signal different from the compressed low-subband signal to be decoded, and two reproduced images previously generated from the reproduced low-subband signal and a reproduced high-subband signal corresponding to the reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

A motion-picture decoding program according to still another aspect of the present invention is a program for letting a computer function as: (a) first decoding means for applying a first decoding process to a compressed high-subband signal resulting from coding of a high-subband signal obtained by subband decomposition of two images temporally arranged in order in a moving picture, thereby generating a reproduced high-subband signal; (b) second decoding means for applying a second decoding process to a compressed low-subband signal resulting from coding of a low-subband signal obtained by subband decomposition of the two images, thereby generating a reproduced low-subband signal; and (c) subband combining means for combining the reproduced high-subband signal and the reproduced low-subband signal, thereby generating two reproduced images as reproduction of each of the two images. In this configuration, (d) the second decoding means references at least one of a reproduced low-subband signal previously generated from a compressed low-subband signal different from the compressed low-subband signal to be decoded, and two reproduced images previously generated from the reproduced low-subband signal and a reproduced high-subband signal corresponding to the reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

In the present invention, the reproduced low-subband signal is generated by adding the predicted signal generated by referencing at least one of the reproduced low-subband signal previously generated from the compressed low-subband signal different from the compressed low-subband signal to be decoded, and the reproduced images, to the signal (reproduced residual signal) resulting from decoding of the compressed low-subband signal to be decoded. This reproduced low-subband signal is combined with the corresponding reproduced high-subband signal to generate two reproduced images. Since two reproduced images are generated by only one subband combining process as described above, the present invention reduces the delay in reconstruction of the moving picture.

### BRIEF DESCRIPTION OF THE DRAWINGS

Fig. 1 is an illustration showing a configuration of a moving picture coding apparatus according to the first embodiment of the present invention.

Fig. 2 is an illustration showing a configuration of a subband decomposing part.

Fig. 3 is an illustration showing a configuration of a subband combining part.

Fig. 4 is a flowchart of a moving picture coding method according to the first embodiment of the present invention.

Fig. 5 is a flowchart about subband decomposing.

Fig. 6 is a flowchart about a second coding process.

Fig. 7 is a flowchart about a second decoding process.

Fig. 8 is a flowchart about subband combining.

Fig. 9 is an illustration showing a configuration af a moving picture coding program according to the first embodiment of the present invention, together with a recording medium.

Fig. 10 is an illustration showing a hardware configuration of a computer for executing a program recorded in a recording medium.

Fig. 11 is a perspective view of a computer for executing a program stored in a recording medium.

Fig. 12 is an illustration showing a configuration of a coding apparatus according to the second embodiment of the present invention.

Fig. 13 is a flowchart of a moving picture coding method according to the second embodiment of the present invention.

Fig. 14 is a flowchart about a second coding process.

Fig. 15 is an illustration showing a configuration of a moving picture coding program according to the second embodiment of the present invention, together with a recording medium.

Fig. 16 is an illustration showing a configuration of a moving picture decoding apparatus according to the third embodiment of the present invention.

Fig. 17 is a flowchart of a moving picture decoding method according to the third embodiment of the present invention.

Fig. 18 is a flowchart about a second decoding process.

Fig. 19 is an illustration showing a configuration of a moving picture decoding program according to an embodiment of the present invention, together with a recording medium

Fig. 20 is an illustration schematically showing the flow of a conventional motion-compensated temporal subband decomposing process.

Fig. 21 is an illustration showing a configuration of a modification example of the moving picture coding apparatus according to the first embodiment of the present invention.

### DESCRIPTION OF THE PREFERRED EMBODIMENTS

Preferred embodiments of the present invention will be described below in detail with reference to the drawings. Identical or equivalent portions will be denoted by the same reference symbols in each drawing.

<First Embodiment>

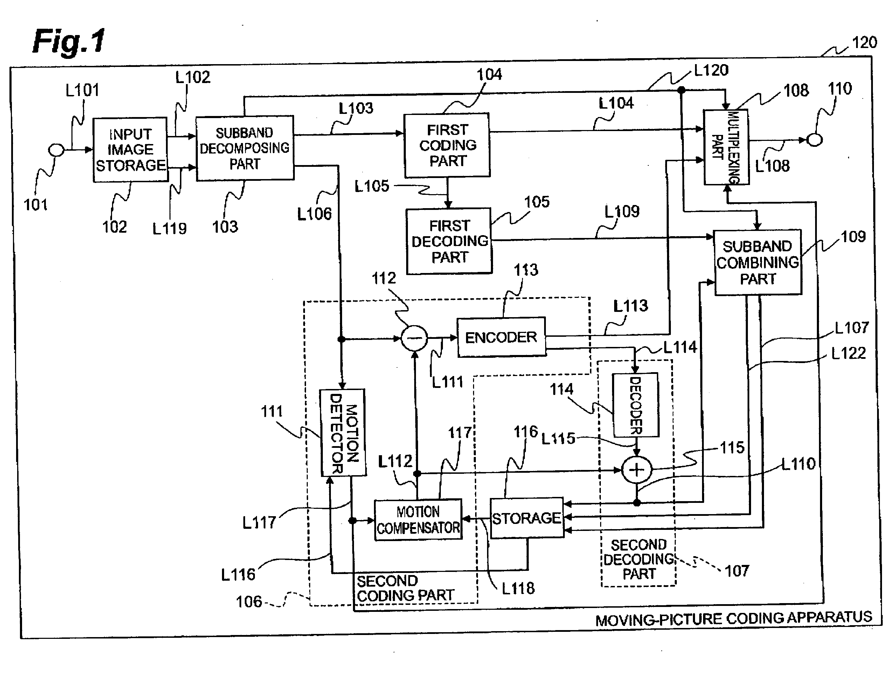

Fig. 1 is an illustration showing a configuration of a coding apparatus according to the first embodiment of the present invention. The moving picture coding apparatus 120 shown in Fig. 1 can be, physically, a computer composed of a CPU (central processing unit), a storage device such as a memory, a display device such as a display, a communication device, and so on. The moving picture coding apparatus 120 may also be a device like a mobile communication terminal such as a cell phone, or a DVD recorder. Namely, a variety of information-processable devices are applicable to the moving picture coding apparatus 120.

As shown in Fig. 1, the moving picture coding apparatus 120 is functionally comprised of input terminal 101, input image storage 102, subband decomposing part (subband decomposing means) 103, first coding part (first coding means) 104, first decoding part (first decoding means) 105, second coding part (second coding means) 106, second decoding part (second decoding means) 107, multiplexing part 108, subband combining part (subband combining means) 109, output terminal 110, and storage 116.

A moving picture containing a plurality of images is fed to input terminal 101. The input terminal 101 outputs the moving picture via line L101 to input image storage 102.

The input image storage 102 temporarily stores the moving picture received via line L101. The input image storage 102 outputs two images temporally arranged in order, out of the plurality of images constituting the stored moving picture, as a first image and a second image to be coded (hereinafter referred to as image K and image L).

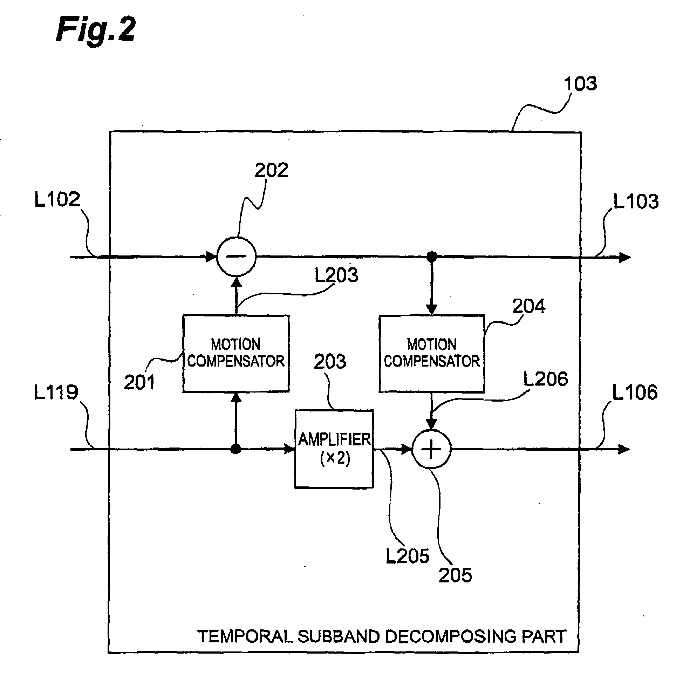

The subband decomposing part 103 temporally decomposes the image K received via line L119 and the image L received via line L102, into subbands, thereby generating a high-subband signal H_{KL} and a low-subband signal L_{KL·} Fig. 2 is an illustration showing a configuration of the subband decomposing part 103. As shown in Fig. 2, the subband decomposing part 103 has motion compensator 201, subtracter 202, amplifier 203, motion compensator 204, and adder 205.

The motion compensator 201 generates a predicted image for the image L by a motion compensation process. The motion compensator 201 references the image K in this motion compensation process. The motion compensator 201 can execute, for example, the motion compensation process based on the block matching method. Specifically, the motion compensator 201 decomposes the image L into blocks consisting of n×m (n=m=8 in the present embodiment) pixels. Concerning each block of the image L, the motion compensator 201 then searches the image K for a region having a subimage with the least error relative to a subimage in that block. For each block, the motion compensator 201 further defines a vector between the block and the corresponding region thus determined, as a motion vector, and the subimage in that region as a predicted image.

The subtracter 202 obtains a difference between the subimage of each block in the image L received via line L102 and the corresponding predicted image received via line L203, thereby generating the high-subband signal H_{KL}.

The amplifier 203 doubles pixel values of the image K received via line L119, to generate an image K₂.

The motion compensator 204 applies a motion compensation process to the high-subband signal H_{KL}, thereby generating a motion-compensated signal. In this motion compensation process the motion compensator 204 uses as a motion vector a vector having a direction opposite to a direction of each motion vector generated by the motion compensator 201.

The adder 205 sums the image K₂ received via line L205 and the motion-compensated signal received via line L206 to generate the low-subband signal L_{KL}.

Returning to Fig. 1, the subband decomposing part 103 outputs the motion vectors via line L120 to multiplexing part 108 and to subband combining part 109.

The first coding part 104 applies a first coding process to the high-subband signal H_{KL} received via line L103, thereby generating a compressed high-subband signal H_{KLC·} Specifically, in this first coding process the first coding part 104 decomposes the high-subband signal H_{KL} into a plurality of blocks. For each block, the first coding part 104 subjects signals in that block to the discrete cosine transform to generate transformation coefficients, quantizes the transformation coefficients to generate the quantized transformation coefficients, and performs variable-length coding of the quantized transformation coefficients to generate the compressed high-subband signal H_{KLC·} The wavelet transform may be applied instead of the discrete cosine transform.

The first decoding part 105 applies a first decoding process to the compressed high-subband signal H_{KLC} received via line L105, thereby reconstructing a reproduced high-subband signal H_{KLR}. The first decoding process is a process symmetric with the first coding process. In the first decoding process, therefore, the first decoding part 105 generates reproduced quantized transformation coefficients by variable-length decoding of the compressed high-subband signal H_{KLC}, dequantizes the reproduced quantized transformation coefficients to generate reproduced transformation coefficients, and subjects the reproduced transformation coefficients to inverse discrete cosine transform, thereby reconstructing the reproduced high-subband signal H_{KLR·}

The second coding part 106 applies a second coding process to the low-subband signal L_{KL} received via line L106, thereby generating a compressed low-subband signal L_{KLC}. The second coding part 106 outputs motion vectors generated in the second coding process, and referenced image identification information via line L117.

The second decoding part 107 applies a second decoding process to the compressed low-subband signal L_{KLC} received via line L114, thereby reconstructing a reproduced low-subband signal L_{KLR·} The second coding part 106 and the second decoding part 107 will be detailed later.

The multiplexing part 108 multiplexes the compressed high-subband signal H_{KLC} received via line L104, the compressed low-subband signal L_{KLC} received via line L113, the motion vectors received via line L120 from the subband decomposing part 103, and the motion vectors and referenced image identification information received via line L117 from the second coding part 106, to generate compressed data of the moving picture. The compressed data is outputted via line L108 to the output terminal 110.

The subband combining part 109 combines the reproduced high-subband signal H_{KLR} received via line L109, with the reproduced low-subband signal L_{KLR} received via line L110, thereby generating reproduced images of the respective images K and L. The reproduced image of the image K will be referred to hereinafter as reproduced image K_{R} and the reproduced image of the image L as reproduced image L_{R}. The subband combining part 109 uses the motion vectors received via line L120 from the subband decomposing part 103 on the occasion of the subband combining.

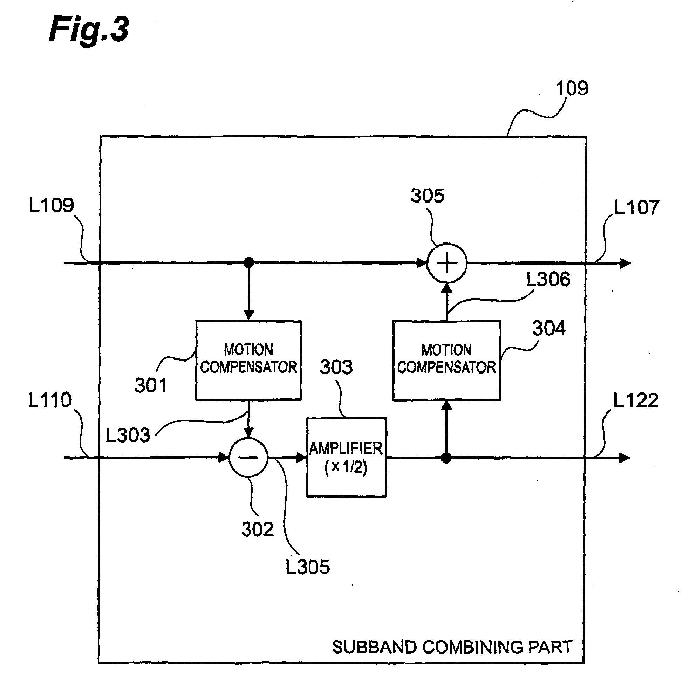

Fig. 3 is an illustration showing a configuration of subband combining part 109. As shown in Fig. 3, the subband combining part 109 is comprised of motion compensator 301, subtracter 302, amplifier 303, motion compensator 304, and adder 305.

The motion compensator 301 applies a motion compensation process to the reproduced high-subband signal H_{KLR} received via line L109, thereby generating a motion-compensated signal. The motion compensation process of the motion compensator 301 is the same process as the motion compensation process of the motion compensator 204. Namely, the motion compensator 301 performs the motion compensation process, using the motion vectors received via L120 (cf. Fig. 1).

The subtracter 302 obtains a difference between the reproduced low-subband signal L_{KLR} received via line L110 and the motion-compensated signal received via line L303, thereby generating a reproduced signal of the image K_{2·}

The amplifier 303 halves signal values of the reproduced signal of the image K₂ received via line L305, thereby generating a reproduced image K_{R}.

The motion compensator 304 applies a motion compensation process to the reproduced image K_{R}, using the motion vectors received from the subband decomposing part 103, thereby generating a predicted image for the reproduced image L_{R}. The motion compensation process of the motion compensator 304 is the same process as the motion compensation process of the motion compensator 201.

The adder 305 sums the reproduced high-subband signal H_{KLR} received via line L109 and the predicted image received via line L306, thereby generating the reproduced image L_{R}.

Returning to Fig. 1, the storage 116 stores the reproduced low-subband signal L_{KLR} received via line L110 and the reproduced image K_{R} and the reproduced image L_{R} received via lines L122 and L107.

The second coding part 106 will be described below in detail with reference to Fig. 1. As shown in Fig. 1, the second coding part 106 is comprised of motion detector 111, subtracter 112, encoder 113, and motion compensator 117.

Two images of the moving picture which are different from the image K and the image L and which are processed prior to the image K and image L by the moving picture coding apparatus 120 will be referred to hereinafter as image M and image N. It is assumed herein that the moving picture coding apparatus 120 stores in the storage 116, a reproduced low-subband signal L_{MNR} resulting from reproduction of a low-subband signal generated by subband decomposition of image M and image N, a reproduced image M_{R} as reproduction of the image M, and a reproduced image N_{R} as reproduction of the image N, prior to the processing of the image K and image L.

The motion detector 111 receives the low-subband signal L_{KL} to be coded, via line L106 and receives the reproduced low-subband signal L_{MNR}, reproduced image M_{R}, and reproduced image N_{R} via line L116. The motion detector 111 executes a motion detection process of the low-subband signal L_{KL} by referencing the reproduced low-subband signal L_{MNR}, reproduced image M_{R}, and reproduced image N_{R}. The motion detector 111 can use the block matching method for this motion detection process.

Specifically, in this motion detection process the motion detector 111 obtains, for each block of the low-subband signal L_{KL}, a region having a signal with the least error relative to a signal in that block, out of the foregoing reproduced low-subband signal L_{MNR}, reproduced image M_{R}, and reproduced image N_{R}. The motion detector 111 defines a vector between each block of the low-subband signal L_{KL} and the corresponding region determined, as a motion vector, and generates information for specifying which of the foregoing reproduced low-subband signal L_{MNR}, reproduced image M_{R}, and reproduced image N_{R} was used for selection of the corresponding region, i.e., referenced image identification information.

The motion compensator 117 generates a predicted signal for the low-subband signal L_{KL} by a motion compensation process. Specifically, in this motion compensation process the motion compensator 117 specifies the foregoing region among the reproduced low-subband signal L_{MNR}, the reproduced image M_{R}, and the reproduced image N_{R} received via line L118, based on the referenced image identification information and motion vector received via line L117, and defines the signal in that region as a predicted signal.

The subtracter 112 obtains a difference between the signal of each block of the low-subband signal L_{KL} received via line L106 and the corresponding predicted signal received via line L112, thereby generating a residual signal.

The encoder 113 applies a coding process to the residual signal received via line L111, thereby generating the compressed low-subband signal L_{KLC·} In the present embodiment the encoder 113 subjects the residual signal to the discrete cosine transform to generate transformation coefficients, quantizes the transformation coefficients to generate quantized transformation coefficients, and performs variable-length coding of the quantized transformation coefficients to generate the compressed low-subband signal L_{KLC}. The wavelet transform may also be applied instead of the discrete cosine transform.

The second decoding part 107 will be described below in detail with reference to Fig. 1. As shown in Fig. 1, the second decoding part 107 is comprised of decoder 114 and adder 115.

The decoder 114 applies a decoding process to the compressed low-subband signal L_{KLC} received via line L114, thereby reconstructing a reproduced residual signal. The decoding process of the decoder 114 is a process symmetric with the coding process of the encoder 113. In the present embodiment the decoder 114 performs variable-length decoding of the compressed low-subband signal L_{KLC} to generate reproduced quantized transformation coefficients, dequantizes the reproduced quantized transformation coefficients to generate reproduced transformation coefficients, and subjects the reproduced transformation coefficients to inverse discrete cosine transform to reconstruct the reproduced residual signal.

The adder 115 sums the predicted signal received via line L112 and the reproduced residual signal received via line L115, thereby generating the reproduced low-subband signal L_{KLR·}

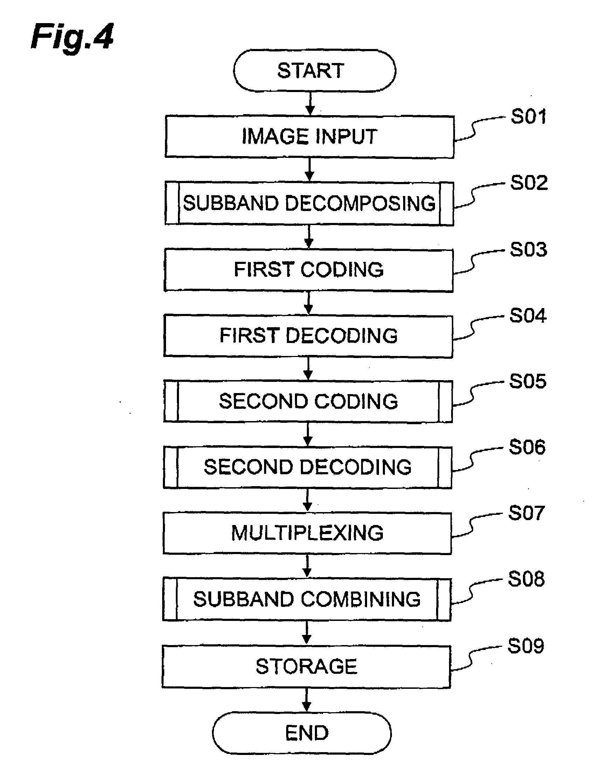

The operation of the moving picture coding apparatus 120 will be described below, together with a moving picture coding method according to the first embodiment. Fig. 4 is a flowchart of the moving picture coding method according to the first embodiment of the present invention.

As shown in Fig. 4, this moving picture coding method includes the first step wherein a moving picture containing a plurality of images is fed to the apparatus, the input image storage 102 temporarily stores the moving picture, and two images temporally arranged in order out of the plurality of images constituting the moving picture stored are outputted as image K and image L to be coded (step S01).

In the next step, the subband decomposing part 103 temporally decomposes the image K and image L into subbands to generate the high-subband signal H_{KL}, low-subband signal L_{KL}, and motion vectors (step S02). Step S02 will be detailed later.

In the next step, the first coding part 104 applies the aforementioned first coding process to the high-subband signal H_{KL}, thereby generating the compressed high-subband signal H_{KLC} (step S03).

In the next step, the first decoding part 105 applies the aforementioned first decoding process to the compressed high-subband signal H_{KLC}, thereby reconstructing the reproduced high-subband signal H_{KLR} (step S04).

In the next step, the second coding part 106 applies the second coding process to the low-subband signal L_{KL}, thereby generating the compressed low-subband signal L_{KLC}, motion vectors, and referenced image identification information (step S05). Step S05 will be detailed later.

In the next step, the second decoding part 107 applies the second decoding process to the compressed low-subband signal L_{KLC}, thereby reconstructing the reproduced low-subband signal L_{KLR} (step S06). Step S06 will be detailed later.

In the next step, the multiplexing part 108 multiplexes the compressed high-subband signal H_{KLC}, the compressed low-subband signal L_{KLC}, the motion vectors received from the subband decomposing part 103, and the motion vectors and referenced image identification information received from the second coding part 106, thereby generating the compressed data (step S07).

In the next step, the subband combining part 109 combines the reproduced high-subband signal H_{KLR} with the reproduced low-subband signal L_{KLR}, thereby generating the reproduced image K_{R} and the reproduced image L_{R} of the respective images K and L (step S08). This subband combining is performed using the motion vectors received from the subband decomposing part 103. Step S08 will be detailed later.

In the next step, the storage 116 stores the reproduced low-subband signal L_{KLR}, reproduced image K_{R}, and reproduced image L_{R} (step S09).

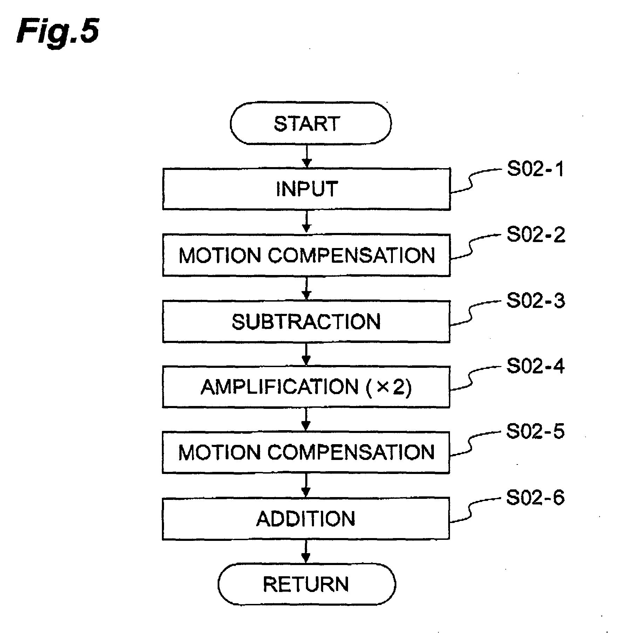

The subband decomposing of step S02 will be described below in detail. Fig. 5 is a flowchart about the subband decomposing. First, two images temporally arranged in order out of the plurality of images constituting the moving picture are fed as image K and image L to be coded (step S02-1).

In the next step, the motion compensator 201 executes the aforementioned motion compensation process (step S02-2). Namely, the predicted image for the image L is generated by referencing the image K.

In the next step, the subtracter 202 obtains the difference between a subimage of each block in the image L and a corresponding predicted image, thereby generating the high-subband signal H_{KL} (step S02-3).

In the next step, the amplifier 203 doubles pixel values of the image K, thereby generating image K₂ (step S02-4).

In the next step, the motion compensator 204 applies the aforementioned motion compensation process to the high-subband signal H_{KL}, thereby generating the motion-compensated signal (step S02-5).

In the next step, the adder 205 sums the image K₂ and the motion-compensated signal to generate the low-subband signal L_{KL} (step S02-6).

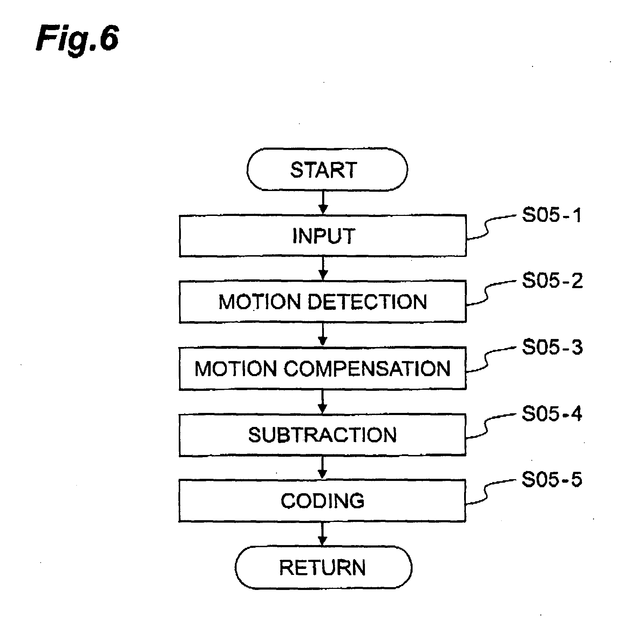

The second coding process of step S05 will be described below in detail. Fig. 6 is a flowchart about the second coding process. The first step is to import the low-subband signal L_{KL} to be coded, and the reproduced low-subband signal L_{MNR}, the reproduced image M_{R}, and the reproduced image N_{R} previously generated from image M and image N (step S05-1).

In the next step, the motion detector 111 executes the aforementioned motion detection process to generate the motion vector and referenced image identification information (step S05-2).

In the next step, the motion compensator 117 executes the aforementioned motion compensation process (step S05-3). In this motion compensation process the motion compensator 117 defines a signal in a region specified by the motion vector and referenced image identification information generated by the motion detector 111, as a predicted signal.

In the next step, the subtracter 112 obtains the difference between the signal of each block of the low-subband signal L_{KL} and the corresponding predicted signal to generate the residual signal (step S05-4).

In the next step, the encoder 113 applies the aforementioned coding process to the residual signal generated by the subtracter 112, to generate the compressed low-subband signal L_{KLC} (step S05-5).

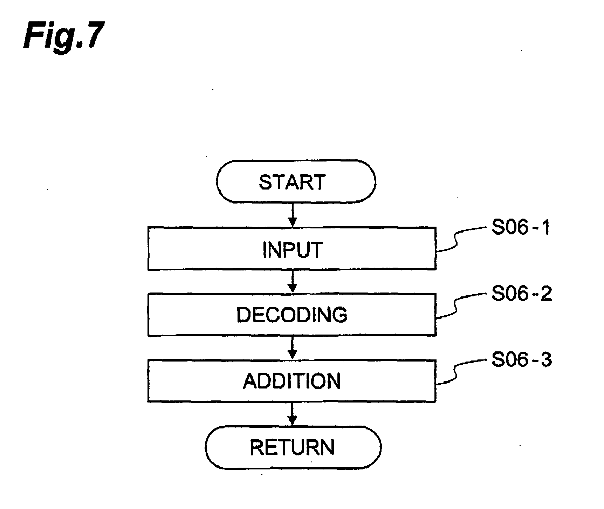

The second decoding process of step S06 will be described below in detail. Fig. 7 is a flowchart about the second decoding process. First, the compressed low-subband signal L_{KLC} is fed to the second decoding part (step S06-1).

In the next step, the decoder 114 applies the decoding process to the compressed low-subband signal L_{KLC}, thereby reconstructing the reproduced residual signal (step S06-2). The decoding process of the decoder 114 is a process symmetric with the coding process of the encoder 113. In the present embodiment the decoder 114 performs variable-length decoding of the compressed low-subband signal L_{KLC} to generate reproduced quantized transformation coefficients, dequantizes the reproduced quantized transformation coefficients to generate reproduced transformation coefficients, and subjects the reproduced transformation coefficients to inverse discrete cosine transform to reconstruct the reproduced residual signal.

In the next step, the adder 115 sums the predicted signal and the reproduced residual signal to generate the reproduced low-subband signal L_{KLR} (step S06-3).

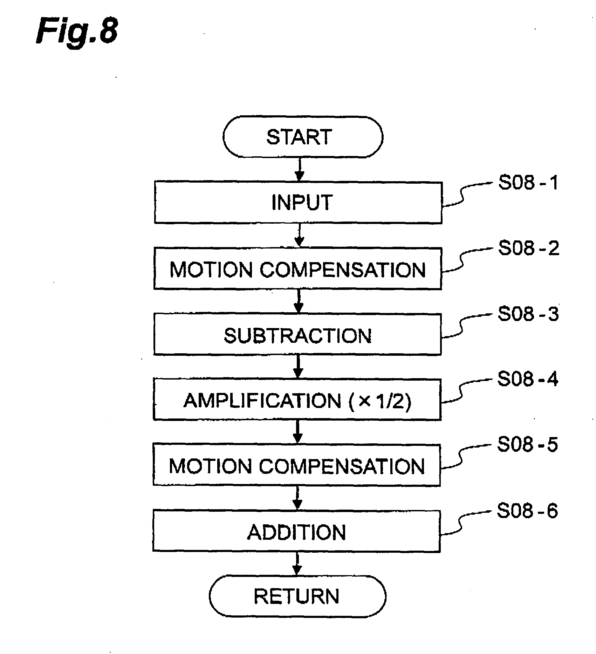

The subband combining of step S08 will be described below in detail. Fig. 8 is a flowchart about the subband combining. The first step is to import the reproduced high-subband signal H_{KLR}, the reproduced low-subband signal L_{KLR}, and the motion vectors received from the subband decomposing part (step S08-1).

In the next step, the motion compensator 301 applies the aforementioned motion compensation process to the reproduced high-subband signal H_{KLR}, thereby generating the motion-compensated signal (step S08-2).

In the next step, the subtracter 302 obtains the difference between the reproduced low-subband signal L_{KLR} and the motion-compensated signal, thereby generating the reproduced signal of the image K₂ (step S08-3).

In the next step, the amplifier 303 halves signal values of the reproduced signal of the image K₂, thereby generating the reproduced image K_{R} (step S08-4).

In the next step, the motion compensator 304 applies the aforementioned motion compensation process to the reproduced image K_{R}, thereby generating the predicted image of the reproduced image L_{R} (step S08-5). This motion compensation process is performed using the motion vectors from the subband decomposing part 103.

In the next step, the adder 305 sums the reproduced high-subband signal H_{KLR} and the predicted image to generate the reproduced image L_{R} (step S08-6).

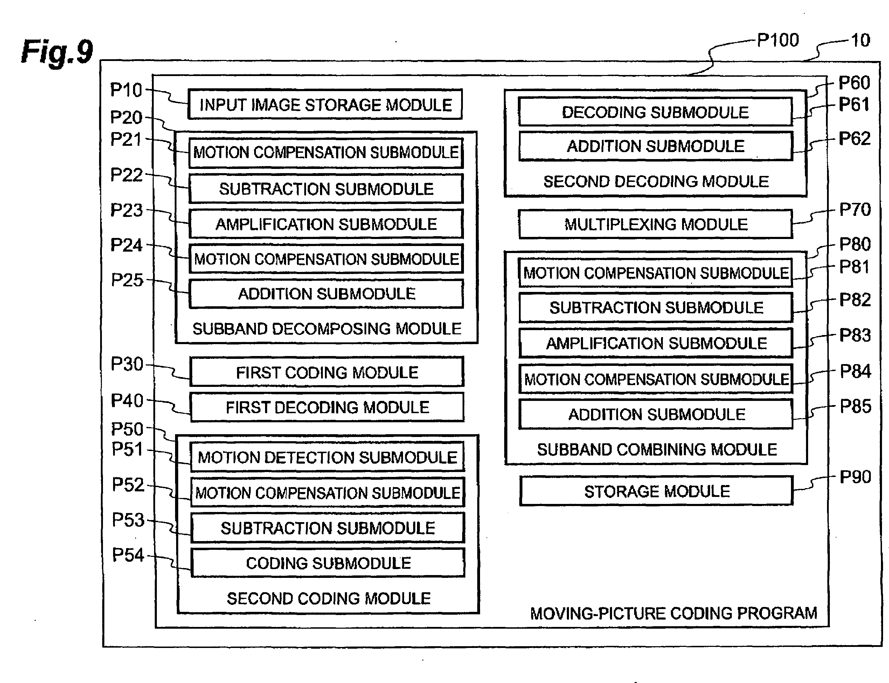

Next, a moving picture coding program for letting a computer operate as moving picture coding apparatus 120 will be described. Fig. 9 is an illustration showing a configuration of a moving picture coding program according to the first embodiment of the present invention, together with a recording medium.

As shown in Fig. 9, the moving picture coding program P100 is provided as stored in recording medium 10. The recording medium 10 is, for example, a recording medium such as a floppy disk, a CD-ROM, a DVD, or a ROM, a semiconductor memory, or the like.

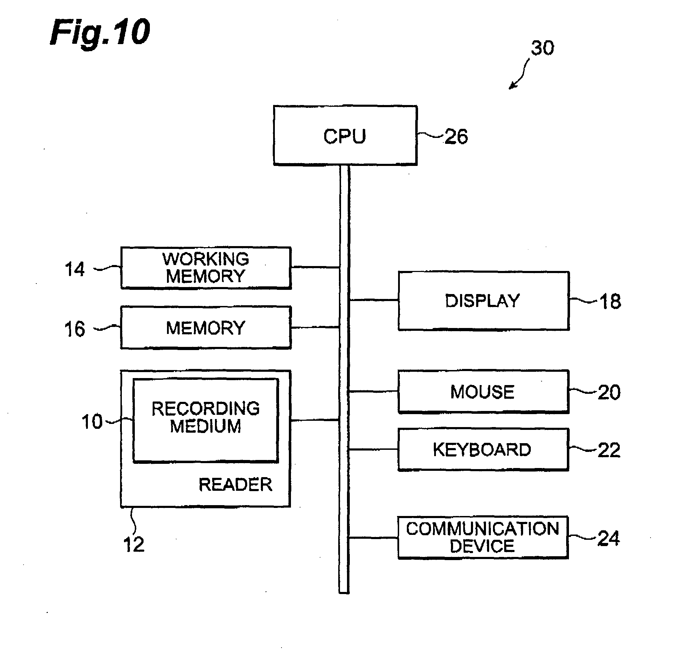

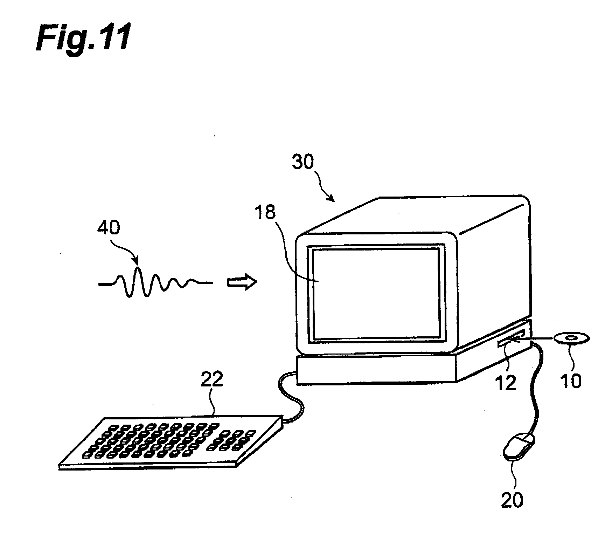

Fig. 10 is an illustration showing a hardware configuration of a computer for executing the program recorded in the recording medium, and Fig. 11 a perspective view of a computer for executing the program stored in the recording medium.

As shown in Fig. 10, computer 30 is composed of reader 12 such as a floppy disk drive, a CD-ROM drive, or a DVD drive, working memory (RAM) 14 in which an operating system is resident, memory 16 for storing a program stored in the recording medium 10, display device 18 such as a display, mouse 20 and keyboard 22 as input devices, communication device 24 for transmission/reception of data and others, and CPU 26 for control on execution of the program. When the recording medium 10 is inserted into the reader 12, the computer 30 becomes able to access the moving picture coding program P100 stored in the recording medium 10, via the reader 12, and thus becomes able to operate as the moving picture coding apparatus 120, based on the moving picture coding program P100.

As shown in Fig. 11, the moving picture coding program P100 may be one provided in the form of computer data signal 40 superimposed on a carrier wave, through a network. In this case, the computer 30 stores the moving picture coding program P100 received by the communication device 24, into the memory 16 and becomes able to execute the moving picture coding program P100.

As shown in Fig. 9, the moving picture coding program P100 is comprised of input image storage module P10, subband decomposing module P20, first coding module P30, first decoding module P40, second coding module P50, second decoding module P60, multiplexing module P70, subband combining module P80, and storage module P90. The subband decomposing module P20 is composed of motion compensation submodule P21, subtraction submodule P22, amplification submodule P23, motion compensation submodule P24, and addition submodule P25; the second coding module P50 is composed of motion detection submodule P51, motion compensation submodule P52, subtraction submodule P53, and coding submodule P54; the second decoding module P60 is composed of decoding submodule P61 and addition submodule P62; the subband combining module P80 is composed of motion compensation submodule P81, subtraction submodule P82, amplification submodule P83, motion compensation submodule P84, and addition submodule P85.

The functions implemented by the computer in accordance with the input image storage module P10, subband decomposing module P20, first coding module P30, first decoding module P40, second coding module P50, second decoding module P60, multiplexing module P70, subband combining module P80, storage module P90, motion compensation submodule P21, subtraction submodule P22, amplification submodule P23, motion compensation submodule P24, addition submodule P25, motion detection submodule P51, motion compensation submodule P52, subtraction submodule P53, coding submodule P54, decoding submodule P61, addition submodule P62, motion compensation submodule P81, subtraction submodule P82, amplification submodule P83, motion compensation submodule P84, and addition submodule P85 are similar to the corresponding elements of the aforementioned input image storage 102, subband decomposing part 103, first coding part 104, first decoding part 105, second coding part 106, second decoding part 107, multiplexing part 108, subband combining part 109, storage 116, motion compensator 201, subtracter 202, amplifier 203, motion compensator 204, adder 205, motion detector 111, motion compensator 117, subtracter 112, encoder 113, decoder 114, adder 115, motion compensator 301, subtracter 302, amplifier 303, motion compensator 304, and adder 305, respectively.

The action and effect of the moving picture coding apparatus 120 will be described below. In the moving picture coding apparatus 120, a plurality of images constituting a moving picture are defined two by two as images to be coded, and the subband decomposition of the images to be coded is executed only once. Therefore, the delay due to the subband decomposition is small. The second coding process is to code the residual signal based on the difference between the low-subband signal based on the images to be coded, and the predicted signal based on at least one of the reproduced low-subband signal and the reproduced images previously generated from two images of the moving picture different from the images to be coded. Therefore, the low-subband signal is efficiently coded even if the number of subband decomposition of the low-subband signal is one.

Accordingly, the time necessary for coding is reduced and the delay time of video transmission is largely decreased. Furthermore, the capacity of the frame memory for storage of the input images and the intermediate processed images on the occasion of coding is largely reduced.

The above described the moving picture coding apparatus 120, and the moving picture coding apparatus 120 stores no signal in the storage 116 on the occasion of coding the first two images to be coded; therefore, in the present embodiment the moving picture coding apparatus 120 applies the intraframe prediction adopted in H.264 to the low-subband signal generated from the first two images to be coded.

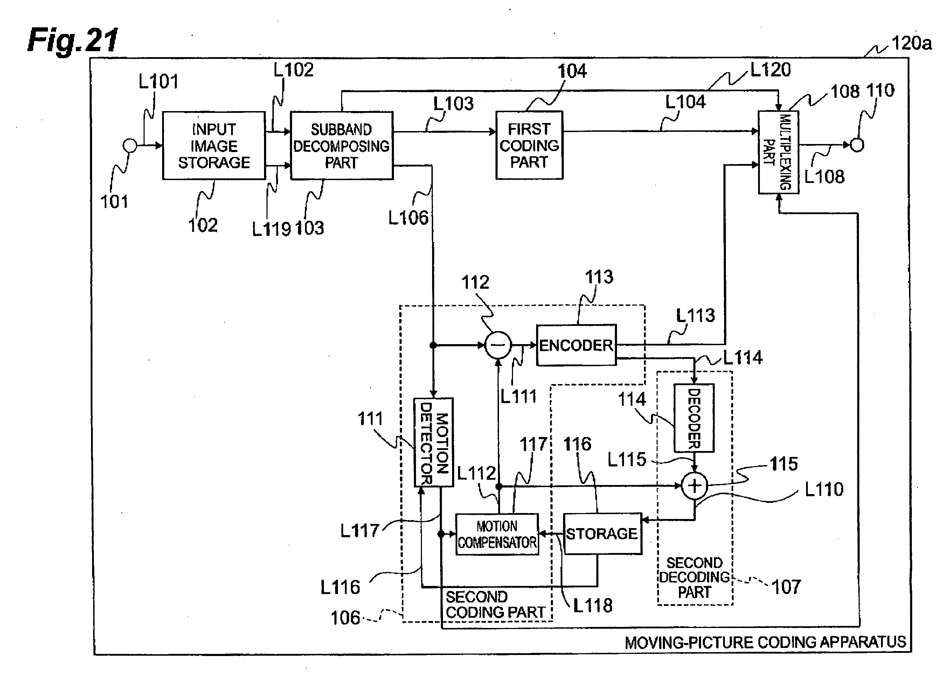

The second coding part 106 generates the predicted signal for the low-subband signal L_{KR} among the reproduced low-subband signal L_{MNR}, reproduced image M_{R}, and reproduced image N_{R} previously generated, but may be configured to generate the predicted signal, using at least one of the reproduced low-subband signal L_{MNR}, reproduced image M_{R}, and reproduced image N_{R·} As shown in Fig. 21, the second coding part 106 may be configured to generate the predicted signal from only the reproduced low-subband signal L_{MNR}. The moving picture coding apparatus 120a in this case can be constructed without the first decoding part 105 and subband combining part 109.

The images K and L to be coded may be two images temporally adjacent to each other, or images of two frames temporally apart from each other.

The first coding part 104 has the configuration different from the second coding part 106, but may have the same configuration as the second coding part 106. In this case, the first coding part 104 generates the predicted signal for the high-subband signal H_{KL} with reference to the reproduced high-subband signal H_{MN} previously generated from the images M and N, for example. In this case, the first decoding part 105 is constructed in a configuration similar to the second decoding part 107.

<Second Embodiment>

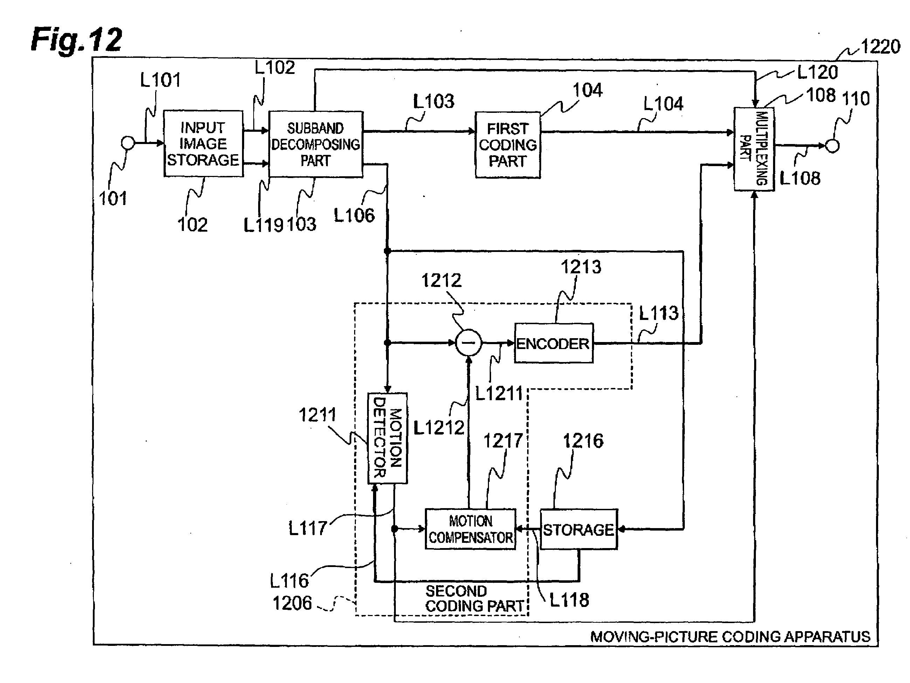

Next, the moving picture coding apparatus according to the second embodiment of the present invention will be described. Fig. 12 is an illustration showing a configuration of the coding apparatus according to the second embodiment of the present invention. The moving picture coding apparatus 1220 shown in Fig. 12 can be, physically, a computer composed of a CPU (central processing unit), a storage device such as a memory, a display device such as a display, a communication device, and so on. The moving picture coding apparatus 1220 may be a mobile communication terminal such as a cell phone, or a device such as a DVD recorder. Namely, a variety of information-processable devices can be applied to the moving picture coding apparatus 1220.

As shown in Fig. 12, the moving picture coding apparatus 1220 is functionally comprised of input terminal 101, input image storage 102, subband decomposing part (subband decomposing means) 103, first coding part (first coding means) 104, second coding part (second coding means) 1206, multiplexing part 108, output terminal 110, and storage 1216.

The input terminal 101, input image storage 102, subband decomposing part 103, first coding part 104, and multiplexing part 108 are elements similar to the corresponding elements in the moving picture coding apparatus 120.

The second coding part 1206 applies a second coding process to the low-subband signal L_{KL} received via line L106, thereby generating the compressed low-subband signal L_{KLC·} The second coding part 1206 outputs the motion vector generated by the second coding process, via line L117.

The storage 1216 stores the low-subband signal L_{KL} received via line L106.

The second coding part 1206 will be described below in detail. As shown in Fig. 12, the second coding part 1206 is composed of motion detector 1211, subtracter 1212, encoder 1213, and motion compensator 1217.

It is assumed hereinafter that the moving picture coding apparatus 1220 stores in the storage 1216 the low-subband signal L_{MN} generated by subband decomposition of image M and image N, prior to the processing of the image K and image L.

The motion detector 1211 receives the low-subband signal L_{KL} to be coded, via line L106 and receives the low-subband signal L_{MN} via line L116. The motion detector 1211 executes a motion detection process with reference to the low-subband signal L_{MN}. Namely, the motion detection process by the motion detector 1211 is different in the referenced signal from the motion detection process by the motion detector 111 in the first embodiment. Through this motion detection process, the motion detector 1211 obtains a vector between each block of the low-subband signal L_{KL} and a corresponding region in the low-subband signal L_{MN} and defines the vector as a motion vector.

The motion compensator 1217 executes a motion compensation process to generate a predicted signal for the low-subband signal L_{KL·} In this motion compensation process, the motion compensator 1217 specifies a region in the low-subband signal L_{MN} received via line L118, using the motion vector received via line L117, and defines a signal in that region as a predicted signal.

The subtracter 1212 obtains the difference between the signal of each block of the low-subband signal L_{KL} received via line L106 and the corresponding predicted signal received via line L1212, thereby generating a residual signal.

The encoder 1213 applies a coding process to the residual signal received via line L1211, to generate the compressed low-subband signal L_{KLC·} This coding process is similar to the coding process by the encoder 113.

Next, the operation of moving picture coding apparatus 1220 will be described. In connection therewith, a moving picture coding method according to the second embodiment will be described.

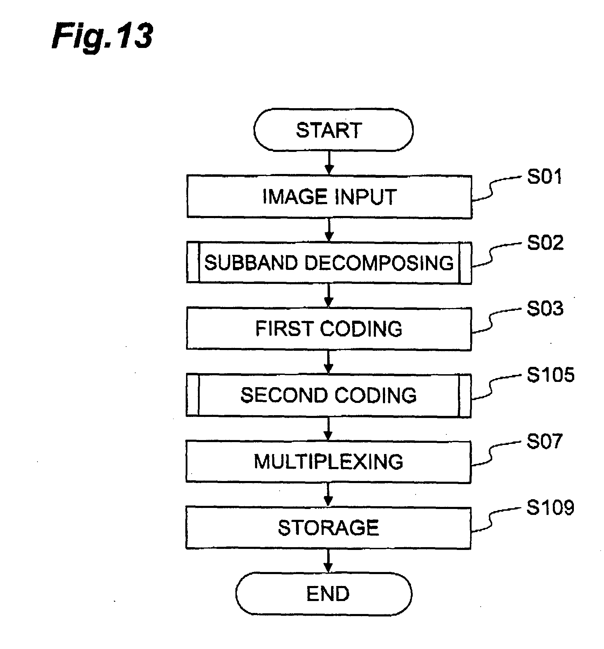

Fig. 13 is a flowchart of the moving picture coding method according to the second embodiment of the present invention.

As shown in Fig. 13, first, processes of step SO1 to step S03 in this moving picture coding method are similar to the corresponding processes in the first embodiment.

In the next step, the second coding part 1206 applies the second coding process to the low-subband signal L_{KL}, thereby generating the compressed low-subband signal L_{KLC} and motion vector (step S105).

The subsequent step of step S07 is similar to the corresponding process in the first embodiment. Subsequent to step S07, the storage 1216 stores the low-subband signal L_{KL} (step S109).

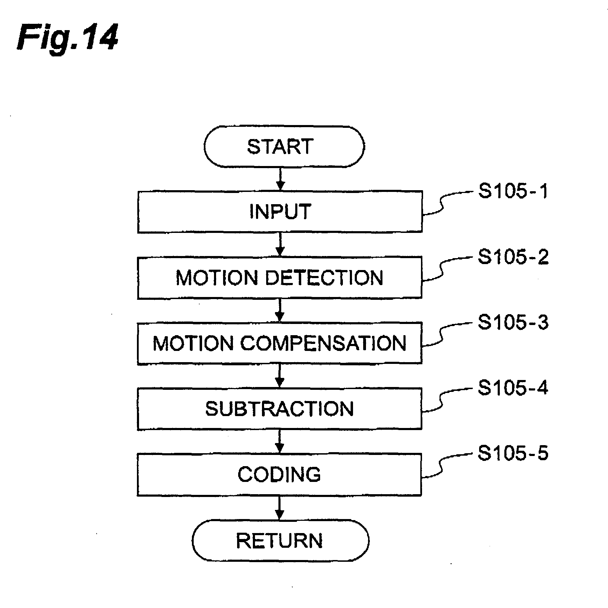

The second coding process of step S105 will be described below in detail. Fig. 14 is a flowchart about the second coding process. The first step is to import the low-subband signal L_{KL} to be coded, and the low-subband signal L_{MN} previously generated from the images M and N (step S105-1).

In the next step, motion detector 1211 executes the aforementioned motion detection process to generate the motion vector (step S 105-2).

In the next step, the motion compensator 1217 executes the aforementioned motion compensation process to generate the predicted signal for the low-subband signal L_{KL} (step S105-3).

In the next step, the subtracter 1212 obtains the difference between the signal of each block of the low-subband signal L_{KL} and the corresponding predicted signal to generate the residual signal (step S105-4).

In the next step, the encoder 1213 applies the aforementioned coding process to the residual signal to generate the compressed low-subband signal L_{KLC} (step S105-5).

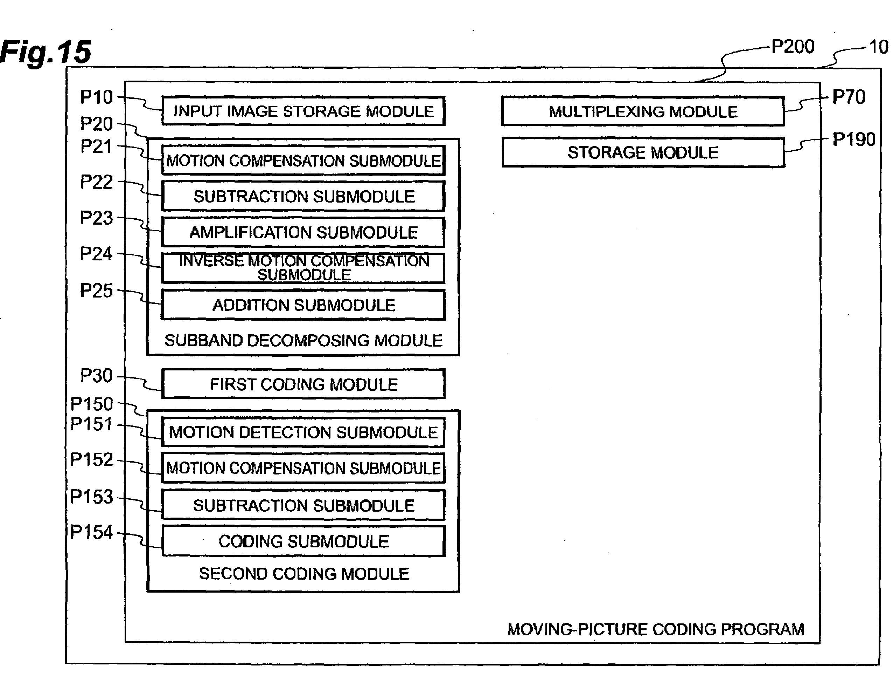

Next, a moving picture coding program for letting a computer operate as the moving picture coding apparatus 1220 will be described. Fig. 15 is an illustration showing a configuration of the moving picture coding program according to the second embodiment of the present invention, together with a recording medium

As shown in Fig. 15, a moving picture coding program P200 is provided as stored in the recording medium 10. The recording medium 10 can be, for example, a recording medium such as a floppy disk, a CD-ROM, a DVD, or a ROM, or a semiconductor memory, or the like.

When the moving picture coding program P200 is put in the reader 12 of computer 30 shown in Figs. 10 and 11, the computer 30 becomes able to access the moving picture coding program P200 stored in the recording medium 10. The moving picture coding program P200 makes the computer 30 able to operate as the moving picture coding apparatus 1220. As shown in Fig. 11, the moving picture coding program P200 may be one provided in the form of computer data signal 40 superimposed on a carrier wave, through a network. In this case, the computer 30 stores the moving picture coding program P200 received by the communication device 24, into the memory 16 and becomes able to execute the moving picture coding program P200.

As shown in Fig. 15, the moving picture coding program P200 is composed of input image storage module P10, subband decomposing module P20, first coding module P30, second coding module P150, multiplexing module P70, and storage module P190. The second coding module P150 is composed of motion detection submodule P151, motion compensation submodule P152, subtraction submodule P153, and coding submodule P154.

The functions implemented by the computer in accordance with the input image storage module P10, subband decomposing module P20, first coding module P30, second coding module P150, multiplexing module P70, storage module P190, motion detection submodule P151, motion compensation submodule P152, subtraction submodule P153, and coding submodule P154 are similar to the corresponding elements of the aforementioned input image storage 102, subband decomposing part 103, first coding part 104, second coding part 1206, multiplexing part 108, storage 1216, motion detector 1211, motion compensator 1217, subtracter 1212, and encoder 1213, respectively.

The action and effect of the moving picture coding apparatus 1220 will be described below. In the moving picture coding apparatus 1220, a plurality of images constituting a moving picture are defined two by two as images to be coded, and the subband decomposition of the images to be coded is executed only once. Therefore, the delay due to the subband decomposition is small. The second coding process is to code the residual signal based on the difference between the low-subband signal based on the images to be coded, and the predicted signal based on the low-subband signal previously generated from two images of the moving picture different from the images to be coded. Therefore, the low-subband signal is efficiently coded even though the number of subband decomposition of the low-subband signal is one.

Accordingly, the time necessary for coding is reduced and the delay time of video transmission is largely decreased. Furthermore, the capacity of the frame memory for storage of the input images and intermediate processed images on the occasion of coding is largely reduced.

<Third Embodiment>

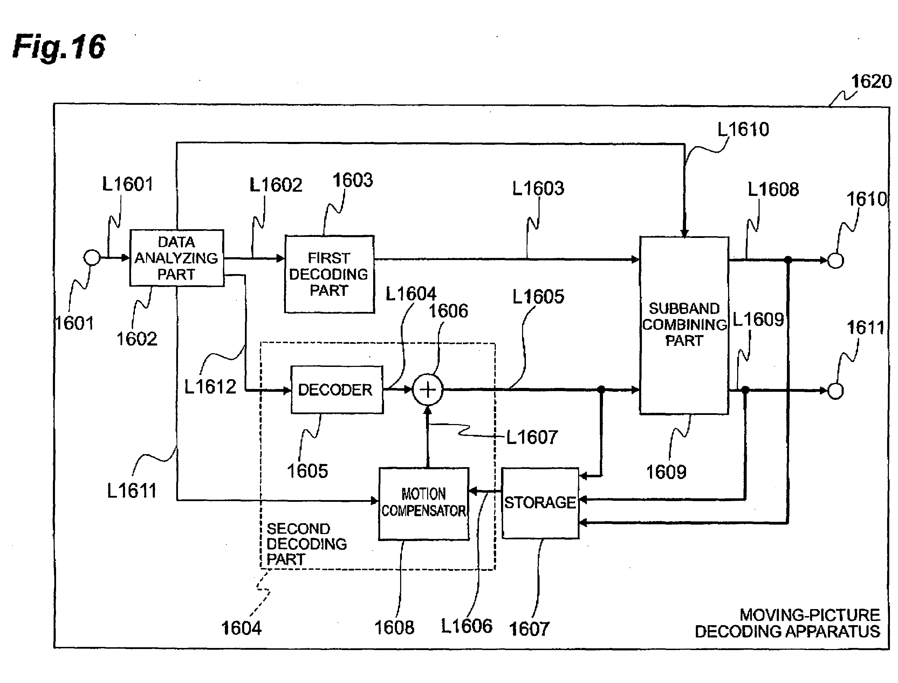

Next, a moving picture decoding apparatus according to the third embodiment of the present invention will be described. Fig. 16 is an illustration showing a configuration of the moving picture decoding apparatus according to the third embodiment of the present invention. The moving picture decoding apparatus 1620 shown in Fig. 16 is a device that can reproduce a moving picture from compressed data generated by the moving picture coding apparatus 120.

The moving picture decoding apparatus 1620 can be, physically, a computer comprised of a CPU (central processing unit), a storage device such as a memory, a display device such as a display, a communication device, and so on. The moving picture decoding apparatus 1620 may be a mobile communication terminal like a cell phone, or a device like a DVD player. Namely, a variety of information-processable devices can be applied to the moving picture decoding apparatus 1620.

As shown in Fig. 16, the moving picture decoding apparatus 1620 is functionally composed of input terminal 1601, data analyzing part 1602, first decoding part (first decoding means) 1603, second decoding part (second decoding means) 1604, storage 1607, subband combining part (subband combining means) 1609, and output terminals 1610 and 1611.

Compressed data generated by the moving picture coding apparatus 120 is fed to the input terminal 1601. The input terminal 1601 outputs the compressed moving picture data via line L1601 to the data analyzing part 1602.

The data analyzing part 1602 analyzes the compressed data received via line L1601 and thereby outputs compressed high-subband signal H_{KLC} via line L1602 to the first decoding part 1603, compressed low-subband signal L_{KLC} via line L1612 to the second decoding part 1604, motion vectors and referenced image identification information generated by the second coding part 106 of the moving picture coding apparatus 120, via line L1611 to the second decoding part 1604, and motion vectors generated by the subband decomposing part 103 of the moving picture coding apparatus 120, via line L1610 to the subband combining part 1609.

The first decoding part 1603 applies a first decoding process to the compressed high-subband signal H_{KLC} received via line L1602, thereby generating reproduced high-subband signal H_{KLR}. The first decoding process is a process symmetric with the first coding process of the moving picture coding apparatus 120. Therefore, the first decoding part 1603 performs variable-length decoding of the compressed high-subband signal H_{KLC} to generate reproduced quantized transformation coefficients, dequantizes the reproduced quantized transformation coefficients to generate reproduced transformation coefficients, and subjects the reproduced transformation coefficients to inverse discrete cosine transform, thereby reconstructing the reproduced high-subband signal H_{KLR}.

The second decoding part 1604 applies a second decoding process to the compressed low-subband signal L_{KLC} received via line L1612, thereby generating reproduced low-subband signal L_{KLR·} A detailed configuration of the second decoding part 1604 will be described later.

The subband combining part 1609 combines the reproduced high-subband signal H_{KLR} received via line L1603, with the reproduced low-subband signal L_{KLR} received via line L1605, thereby generating reproduced image K_{R} and reproduced image L_{R} of images K and L. The subband combining part 1609 uses the motion vectors received via line L1610 on the occasion of the subband combining. The process of the subband combining part 1609 is the same process as the process of the subband combining part 109 in the moving picture coding apparatus 120.

The storage 1607 stores the reproduced low-subband signal L_{KLR} received via line L1605 and the reproduced image K_{R} and reproduced image L_{R} received via lines L1608 and L1609.

The second decoding part 1604 will be detailed below. The second decoding part 1604 is comprised of decoder 1605, adder 1606, and motion compensator 1608.

It is assumed herein that the moving picture decoding apparatus 1620 stores in the storage 1607 the reproduced low-subband signal L_{MNR}, reproduced image M_{R}, and reproduced image N_{R}, prior to applying the second decoding process to the compressed low-subband signal L_{KLC}.

The decoder 1605 applies a decoding process to the compressed low-subband signal L_{KLC} received via line L1612, thereby reconstructing a reproduced residual signal. This decoding process is a process symmetric with the coding process of the encoder 113 in the moving picture coding apparatus 120.

The motion compensator 1608 specifies a region among the reproduced low-subband signal L_{MNR}, reproduced image M_{R}, and reproduced image N_{R} received via line L1606, based on the referenced image identification information and motion vector received via line L1611, and defines a signal in that region as a predicted signal.

The adder 1606 sums the reproduced residual signal received via line L1604 and the predicted signal received via line L1607, thereby generating the reproduced low-subband signal L_{KLR}.

Next, the operation of moving picture decoding apparatus 1620 will be described. In connection therewith, a moving picture decoding method according to the third embodiment will be described.

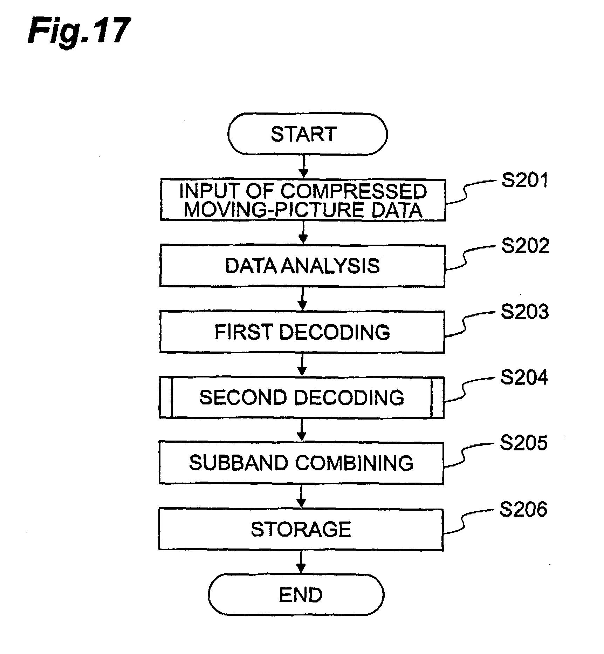

Fig. 17 is a flowchart of the moving picture decoding method according to the third embodiment of the present invention.

As shown in Fig. 17, this moving picture decoding method includes the first step of importing compressed data (step S201).

In the next step, the data analyzing part 1602 analyzes the compressed moving picture data and thereby outputs the compressed high-subband signal H_{KLC} to the first decoding part 1603, the compressed low-subband signal L_{KLC} to the second decoding part 1604, the motion vectors and referenced image identification information generated by the second coding part 106 of the moving picture coding apparatus 120, to the second decoding part 1604, and the motion vectors generated by the subband decomposing part 103 of the moving picture coding apparatus 120, to the subband combining part 1609 (step S202).

In the next step, the first decoding part 1603 applies the aforementioned first decoding process to the compressed high-subband signal H_{KLC}, thereby reconstructing the reproduced high-subband signal H_{KLR} (step S203).

In the next step, the second decoding part 1604 applies the aforementioned second decoding process to the compressed low-subband signal L_{KLC}, thereby reconstructing the reproduced low-subband signal L_{KLR} (step S204). Step S204 will be detailed later.

In the next step, the subband combining part 1609 combines the reproduced high-subband signal H_{KLR} with the reproduced low-subband signal L_{KLR}, thereby generating the reproduced images of the respective images K and L (step S205).

In the next step, the storage 1607 stores the foregoing reproduced low-subband signal L_{KLR}, reproduced image K_{R}, and reproduced image L_{R} (step S206).

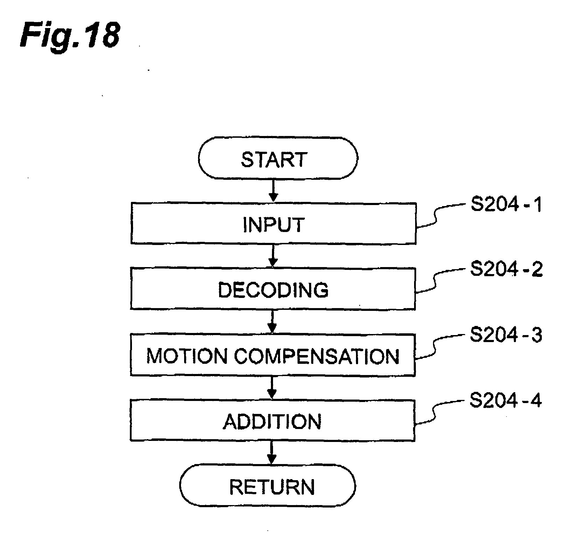

The second decoding of step S204 will be described below in detail. Fig. 18 is a flowchart about the second decoding process. The first step is to import the compressed low-subband signal L_{KLC}, the motion vectors and referenced image identification information generated by the second coding part 106 of the moving picture coding apparatus 120, and the foregoing reproduced low-subband signal L_{KLR}, reproduced image K_{R}, and reproduced image L_{R} (step S204-1).

In the next step, the decoder 1605 applies the decoding process to the compressed low-subband signal L_{KLC}, thereby reconstructing the reproduced residual signal. This decoding process is a process symmetric with the coding process of the encoder 113 in the moving picture coding apparatus 120 (step S204-2).

In the next step, the motion compensator 1608 specifies a region among the reproduced low-subband signal L_{MNR}, reproduced image M_{R}, and reproduced image N_{R}, based on the referenced image identification information and motion vector, and defines a signal in that region as a predicted signal (step S204-3).

In the next step, the adder 1606 sums the reproduced residual signal and the predicted signal to generate the reproduced low-subband signal L_{KLR} (step S204-4).

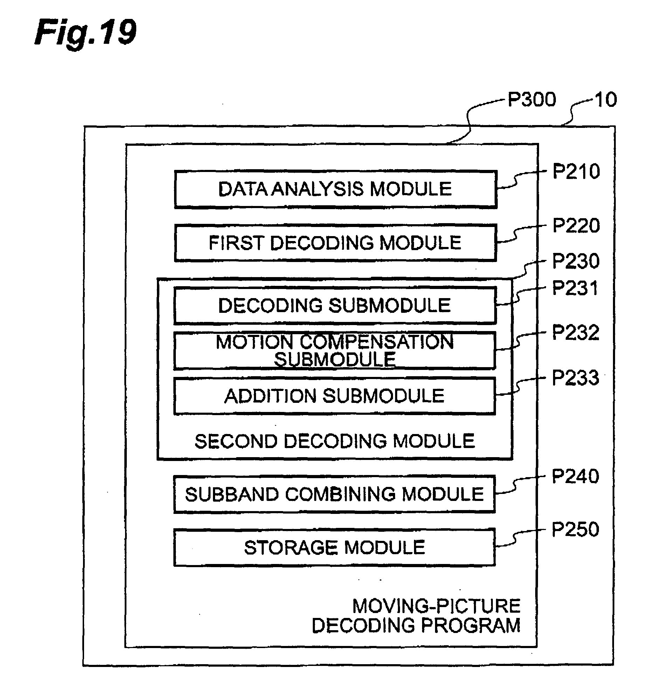

Next, a moving picture decoding program according to an embodiment of the present invention will be described. Fig. 19 is an illustration showing a configuration of the moving picture decoding program according to the embodiment of the present invention, together with a recording medium.

As shown in Fig. 19, the moving picture decoding program P300 is provided as stored in the recording medium 10. The recording medium 10 can be, for example, a recording medium such as a floppy disk, a CD-ROM, a DVD, or a ROM, or a semiconductor memory, or the like.

When the moving picture decoding program P300 is set in the reader 12 of the computer 30 shown in Figs. 10 and 11, the computer 30 becomes able to access the moving picture decoding program P300 stored in the recording medium 10. The moving picture decoding program P300 makes the computer 30 able to operate as the moving picture decoding apparatus 1620. As shown in Fig. 11, the moving picture decoding program P300 may be one provided in the form of computer data signal 40 superimposed on a carrier wave, through a network. In this case, the computer 30 is able to store in the memory 16 the moving picture decoding program P300 received by the communication device 24 and to execute the moving picture decoding program P300.

As shown in Fig. 19, the moving picture decoding program P300 is comprised of data analyzing module P210, first decoding module P220, second decoding module P230, subband combining module P240, and storage module P250. The second decoding module P230 is comprised of decoding submodule P231, motion compensation submodule P232, and addition submodule P233.

The functions implemented by the computer in accordance with the data analyzing module P210, first decoding module P220, second decoding module P230, subband combining module P240, storage module P250, decoding submodule P231, motion compensation submodule P232, and addition submodule P233 are similar to the corresponding elements of the aforementioned data analyzing part 1602, first decoding part 1603, second decoding part 1604, subband combining part 1609, storage 1607, decoder 1605, motion compensator 1608, and adder 1606, respectively.

The moving picture decoding apparatus 1620 was described above, and, since the moving picture decoding apparatus 1620 stores no signal in the storage 1607 on the occasion of reproducing the first images, the moving picture decoding apparatus 1620 in the present embodiment is arranged to use the intraframe prediction decoding process applied in H.264, on the occasion of reproducing the first images.

The second decoding part 1604 was configured to generate the predicted signal among the reproduced low-subband signal L_{MNR}, reproduced image M_{R}, and reproduced image N_{R} previously generated, but the predicted signal can also be generated from at least one of the reproduced low-subband signal L_{MNR}, reproduced image M_{R}, and reproduced image N_{R} in accordance with the second coding process by the second coding part of the moving picture coding apparatus. Furthermore, without having to be limited to the reproduced low-subband signal L_{MNR}, reproduced image M_{R}, and reproduced image N_{R}, the predicted signal may be generated using a plurality of reproduced low-subband signal L_{XYR}, reproduced image X_{R}, and reproduced image Y_{R} different from those reproduced signals, as reference images. It is supposed herein that X ≠ M or N and Y ≠ M or N.

Namely, the predicted signal for the low-subband signal may be generated by use of a reproduced low-subband signal and a reproduced image which are generated prior to generating this predicted signal, as reference images. In other words, the predicted signal for the low-subband signal may be generated by use of not only a reproduced low-subband signal of which subband-level is as same as the subband-level of this low-subband signal but also a reproduced image of which subband (subband-level) is higher than subband (subband-level) of this low-subband signal, as reference images. Furthermore, in other words, the predicted signal for the low-subband signal may be predicted with respect to a plurality of subband-levels. In addition, the predicted signal for the low-subband signal may be generated by use of not only a reproduced low-subband signal and reproduced images generated from immediately preceding two images with respect to two images which are the bases of this low-subband signal in the moving picture but also a reproduced low-subband signal and reproduced images generated from further preceding two images in the moving picture, as reference images.

The action and effect of the moving picture decoding apparatus 1620 will be described below. In the moving picture decoding apparatus 1620, the reproduced low-subband signal is generated by adding the predicted signal generated with reference to at least one of the reproduced low-subband signal previously generated from the compressed low-subband signal different from the compressed low-subband signal to be decoded, and the reproduced images, to the signal (reproduced residual signal) decoded from the compressed low-subband signal to be decoded. This reproduced low-subband signal is combined with the corresponding reproduced high-subband signal to generate two reproduced images. Since the two reproduced images are generated by the single subband combining process in this manner, the delay is reduced in reconstruction of the moving picture.

Accordingly, the time necessary for decoding is decreased and the delay time of video transmission is largely reduced. Furthermore, the capacity of the frame memory for storage of the input images and intermediate processed images on the occasion of decoding is largely decreased.

As described above, the present invention provides the motion-picture coding apparatus, motion-picture coding method, and motion-picture coding program capable of reducing the processing delay of the motion-compensated temporal subband decomposition and coding the moving picture with high coding efficiency. In addition, the present invention provides the motion-picture decoding apparatus, motion-picture decoding method, and motion-picture decoding program capable of reconstructing the moving picture with small processing delay, from data generated by the motion-picture coding apparatus.

The present invention reduces the time necessary for coding and decoding and therefore largely reduces the delay time of video transmission. Furthermore, the present invention largely reduces the capacity of the frame memory for storing the input images and intermediate processed images on the occasion of coding and decoding.

The principle of the present invention was described above with illustrations in the preferred embodiments, and it is obvious to those skilled in the art that the present invention can be modified in arrangement and details, without departing from the principle of the invention. It is noted that the present invention is by no means limited to the specific configurations disclosed in the embodiments. Therefore, the Inventor claims rights to all modifications and changes falling within the scope of claims and within the scope of the spirit thereof.

## Claims

1. A moving picture coding apparatus comprising:
subband decomposing means for defining two images temporally arranged in order in a moving picture, as a first image and a second image, and temporally decomposing the first image and the second image into subbands, thereby generating a high-subband signal and a low-subband signal;
first coding means for applying a first coding process to the high-subband signal, thereby generating a compressed high-subband signal; and
second coding means for applying a second coding process to the low-subband signal, thereby generating a compressed low-subband signal,
wherein the second coding means defines the low-subband signal based on the first image and the second image, as a low-subband signal to be coded, references a low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

2. A moving picture coding apparatus comprising:
subband decomposing means for defining two images temporally arranged in order in a moving picture, as a first image and a second image, and temporally decomposing the first image and the second image into subbands, thereby generating a high-subband signal and a low-subband signal;
first coding means for applying a first coding process to the high-subband signal, thereby generating a compressed high-subband signal;
second coding means for applying a second coding process to the low-subband signal, thereby generating a compressed low-subband signal; and
decoding means for applying a decoding process for reproduction of the low-subband signal, to the compressed low-subband signal, thereby generating a reproduced low-subband signal,
wherein the second coding means defines the low-subband signal based on the first image and the second image, as a low-subband signal to be coded, references a reproduced low-subband signal previously generated from two images of the moving picture different from the first image and the second image, thereby to generate a predicted signal for the low-subband signal to be coded, and codes a residual signal based on a difference between the low-subband signal to be coded and the predicted signal to generate the compressed low-subband signal.

3. A moving picture coding apparatus comprising:
subband decomposing means for defining two images temporally arranged in order in a moving picture, as a first image and a second image, and temporally decomposing the first image and the second image into subbands, thereby generating a high-subband signal and a low-subband signal;
first coding means for applying a first coding process to the high-subband signal, thereby generating a compressed high-subband signal;
first decoding means for applying a first decoding process for reproduction of the compressed high-subband signal, to the compressed high-subband signal, thereby generating a reproduced high-subband signal;
second coding means for applying a second coding process to the low-subband signal, thereby generating a compressed low-subband signal:
second decoding means for applying a second decoding process for reproduction of the low-subband signal, to the compressed low-subband signal, thereby generating a reproduced low-subband signal; and
subband combining means for combining the reproduced high-subband signal generated by the first decoding means, with the reproduced low-subband signal generated by the second decoding means, thereby generating reproduced images of the first image and the second image,
wherein the second coding means defines the low-subband signal based on the first image and the second image, as a low-subband signal to be coded, references at least one of a reproduced low-subband signal previously generated from two images of the moving picture different from the first image and the second image and two reproduced images generated from said two images, thereby to generate a predicted signal for the low-subband signal to be coded, and codes a residual signal based on a difference between the low-subband signal to be coded and the predicted signal to generate the compressed low-subband signal.

4. A moving picture decoding apparatus comprising:
first decoding means for applying a first decoding process to a compressed high-subband signal resulting from coding of a high-subband signal obtained by subband decomposition of two images temporally arranged in order in a moving picture, thereby generating a reproduced high-subband signal; and
second decoding means for applying a second decoding process to a compressed low-subband signal resulting from coding of a low-subband signal obtained by subband decomposition of said two images, thereby generating a reproduced low-subband signal,
wherein the second decoding means references a reproduced low-subband signal previously generated from a compressed low-subband signal different from said compressed low-subband signal to be decoded, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

5. A moving picture decoding apparatus comprising:
first decoding means for applying a first decoding process to a compressed high-subband signal resulting from coding of a high-subband signal obtained by subband decomposition of two images temporally arranged in order in a moving picture, thereby generating a reproduced high-subband signal;
second decoding means for applying a second decoding process to a compressed low-subband signal resulting from coding of a low-subband signal obtained by subband decomposition of said two images, thereby generating a reproduced low-subband signal; and
subband combining means for combining the reproduced high-subband signal and the reproduced low-subband signal, thereby generating two reproduced images as reproduction of each of said two images,
wherein the second decoding means references at least one of a reproduced low-subband signal previously generated from a compressed low-subband signal different from said compressed low-subband signal to be decoded, and two reproduced images previously generated from the reproduced low-subband signal and a reproduced high-subband signal corresponding to said reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

6. A moving picture coding method comprising:
a subband decomposing step wherein subband decomposing means defines two images temporally arranged in order in a moving picture, as a first image and a second image, and temporally decomposes the first image and the second image into subbands, thereby generating a high-subband signal and a low-subband signal;
a first coding step wherein first coding means applies a first coding process to the high-subband signal, thereby generating a compressed high-subband signal;
a first decoding step wherein first decoding means applies a first decoding process for reproduction of the compressed high-subband signal, to the compressed high-subband signal, thereby generating a reproduced high-subband signal;
a second coding step wherein second coding means applies a second coding process to the low-subband signal, thereby generating a compressed low-subband signal;
a second decoding step wherein second decoding means applies a second decoding process for reproduction of the low-subband signal, to the compressed low-subband signal, thereby generating a reproduced low-subband signal; and
a subband combing step wherein subband combining means combines the reproduced high-subband signal generated by the first decoding means and the reproduced low-subband signal generated by the second decoding means, thereby generating reproduced images of the first image and the second image,
wherein in the second coding step the second coding means defines the low-subband signal based on the first image and the second image, as a low-subband signal to be coded, references at least one of a reproduced low-subband signal previously generated from two images of the moving picture different from the first image and the second image, and two reproduced images previously generated from said two images, thereby to generate a predicted signal for the low-subband signal to be coded and codes a residual signal based on a difference between the low-subband signal to be coded and the predicted signal to generate the compressed low-subband signal.

7. A moving picture decoding method comprising:
a first decoding step wherein first decoding means applies a first decoding process to a compressed high-subband signal resulting from coding of a high-subband signal obtained by subband decomposition of two images temporally arranged in order in a moving picture, thereby generating a reproduced high-subband signal;
a second decoding step wherein second decoding means applies a second decoding process to a compressed low-subband signal resulting from coding of a low-subband signal obtained by subband decomposition of said two images, thereby generating a reproduced low-subband signal; and
a subband combining step wherein subband combining means combines the reproduced high-subband signal and the reproduced low-subband signal, thereby generating two reproduced images as reproduction of each of said two images,
wherein in the second decoding step the second decoding means references at least one of a reproduced low-subband signal previously generated from a compressed low-subband signal different from the compressed low-subband signal to be decoded, and two reproduced images previously generated from the reproduced low-subband signal and a reproduced high-subband signal corresponding to said reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.

8. A moving picture coding program for letting a computer function as:
subband decomposing means for defining two images temporally arranged in order in a moving picture, as a first image and a second image, and temporally decomposing the first image and the second image into subbands, thereby generating a high-subband signal and a low-subband signal;
first coding means for applying a first coding process to the high-subband signal, thereby generating a compressed high-subband signal;
first decoding means for applying a first decoding process for reproduction of the compressed high-subband signal, to the compressed high-subband signal, thereby generating a reproduced high-subband signal;
second coding means for applying a second coding process to the low-subband signal, thereby generating a compressed low-subband signal;
second decoding means for applying a second decoding process for reproduction of the low-subband signal, to the compressed low-subband signal, thereby generating a reproduced low-subband signal; and
subband combining means for combining the reproduced high-subband signal generated by the first decoding means, with the reproduced low-subband signal generated by the second decoding means, thereby generating reproduced images of the first image and the second image,
wherein the second coding means defines the low-subband signal based on the first image and the second image, as a low-subband signal to be coded, references at least one of a reproduced low-subband signal previously generated from two images of the moving picture different from the first image and the second image and two reproduced images generated from said two images, thereby to generate a predicted signal for the low-subband signal to be coded, and codes a residual signal based on a difference between the low-subband signal to be coded and the predicted signal to generate the compressed low-subband signal.

9. A moving picture decoding program for letting a computer function as:
first decoding means for applying a first decoding process to a compressed high-subband signal resulting from coding of a high-subband signal obtained by subband decomposition of two images temporally arranged in order in a moving picture, thereby generating a reproduced high-subband signal;
second decoding means for applying a second decoding process to a compressed low-subband signal resulting from coding of a low-subband signal obtained by subband decomposition of said two images, thereby generating a reproduced low-subband signal; and
subband combining means for combining the reproduced high-subband signal and the reproduced low-subband signal, thereby generating two reproduced images as reproduction of each of said two images,
wherein the second decoding means references at least one of a reproduced low-subband signal previously generated from a compressed low-subband signal different from said compressed low-subband signal to be decoded, and two reproduced images previously generated from the reproduced low-subband signal and a reproduced high-subband signal corresponding to said reproduced low-subband signal, thereby to generate a predicted signal for the compressed low-subband signal to be decoded, and sums a signal resulting from decoding of the compressed low-subband signal to be decoded, and the predicted signal to generate the reproduced low-subband signal with respect to the compressed low-subband signal to be decoded.
